# NEUE EUROPÄISCHE PATENTSCHRIFT

(11) **EP 0 403 974 B2**
(45) Veröffentlichungstag und Bekanntmachung des Hinweises auf die Entscheidung über den Einspruch: **14.01.1998**
(45) Hinweis auf die Patenterteilung: 11.05.1994
(21) Anmeldenummer: 90111334.0
(22) Anmeldetag: 15.06.1990
(51) Int. Cl.: C04B 24/32

(54) **Verwendung von Ethylenoxid/Propylenoxid-Blockcopolymeren in hydraulisch abbindenden Massen sowie die so erhaltenen Massen**
Use of ethyleneoxide/propyleneoxide blockcopolymers in hydraulic settable masses and the masses so obtained
Utilisation de copolymères séquences d'oxyde d'éthylène et d'oxyde de propylène dans des masses à prise hydraulique et les masses ainsi obtenues

(30) Priorität: 23.06.1989 DE 3920662
(43) Veröffentlichungstag der Anmeldung: 27.12.1990
(73) Patentinhaber: Henkel Kommanditgesellschaft auf Aktien, 40191 Düsseldorf (DE)
(72) Erfinder: Knop, Bernhard, Dr., D-4019 Monheim-Blee (DE); Tamm, Horst, D-5657 Haan (DE); Walter, Gerhard, D-4006 Erkrath (DE)

(56) Entgegenhaltungen:
- FR-A- 2 372 126
- CHEMICAL ABSTRACTS, Band 102, Nr. 4, Januar 1985, Seite 398, Zusammenfassung Nr. 30962g, Columbus, Ohio, US; & JP-A-59 146 959 (KAJIMA CORP. KURITA WATER INDUSTRIES LTD) 23-08-1984
- CHEMICAL ABSTRACTS, Band 109, 1988, Seite 343, Zusammenfassung Nr. 78744j, Columbus, Ohio, US; & JP-A-63 55 176 (DAINIPPON INK AND CHEMICALS INC.) 09-03-1988
- Das Pluronic Gitternetz - Broschüre der Fa. Erbslöh

## Beschreibung

Die Erfindung betrifft die Verwendung von durch Anlagerung von Ethylenoxid an Polypropylenglykol gebildeten Ethylenoxid/Propylenoxid-Blockcopolymeren mit einem Gehalt an 5 bis 35 Gew.-%, bezogen auf das Gesamtgewicht der Blockcopolymeren, an Ethylenoxygruppen und einem Zahlenmittel der Molmasse des Polypropylenglykols im Bereich von 1500 bis 3000, als Zusatz zur Verminderung des Staubens trockener, hydraulisch abbindender Massen, insbesondere zementärer Spachtelmassen.

Unter hydraulisch abbindenden Massen im Sinne der Erfindung sind Massen, insbesondere auf Basis von Gips und/oder Zement, zu verstehen, die für Bauzwecke eingesetzt werden. Die zementären Spachtelmassen schließen im Sinne der Erfindung auch Nivellier-, Ausgleich- und Reparaturmassen ein; diese Massen sind feinkörnige Pulver und werden im folgenden unter dem vereinfachenden Begriff der Spachtelmassen zusammengefaßt.

Spachtelmassen dienen unter anderem zur fachmännischen Vorbereitung von Untergründen zur Verlegung von Fußbodenbelägen. Sie enthalten Zement, z.B. Portlandzement und/oder Tonerdeschmelzzement, Gips, Quarzsand, Kalksteinmehl und andere anorganische Füllstoffe sowie anorganische und organische Additive wie Cellulosederivate, Redispersionspulver, Casein, pflanzliche Proteine, insbesondere Weizenprotein, und dergleichen.

Spachtelmassen kommen als feine Pulver in den Handel, die an der Baustelle mit Wasser angesetzt werden; mit Hilfe der wäßrigen Ansätze können ebene, glatte, hinreichend saugfähige und feste Untergründe, z.B. für zu verlegende Fußbodenbeläge, geschaffen werden. Das Anrühren der Pulver mit Wasser ist mit einer starken Staubentwicklung verbunden. Da Zement durch seine hohe Alkalität ein haut- und insbesondere schleimhautreizendes Agens ist, ist diese Staubentwicklung unerwünscht.

Üblicherweise wird versucht, die Staubentwicklung bei hydraulisch abbindenden Massen, insbesondere Spachtelmassen, über den Mahlgrad bzw. die Kornzusammensetzung des pulverförmigen Produktes zu verringern, wobei jedoch die Verarbeitbarkeit gröberer Pulver verschlechtert ist. Eine weitere bekannte Methode ist die Aggregation, z.B. mit Wasser, wäßrigen Lösungen oder Dispersionen. So ist aus der US-C 4 780 143 bekannt, Klinker vor der Vermahlung zu Zement zur Verringerung der Staubentwicklung mit wäßrigem Schaum zu versetzen. Gemäß JP-A 63/2847 sind Zusätze von Kunststoffdispersionen zu Zement für Spritzbetonzusammensetzungen vorgeschlagen worden, um die Staubbildung zu erniedrigen.

Eine vorübergehende Aggregation bei hydraulisch abbindenden Massen ist dann ohne Bedeutung, wenn die Produkte nachträglich vermahlen werden oder als Spritzbeton oder Spritzmörtel eingesetzt werden sollen. In feinpulverigen Spachtelmassen, auf die nach dem Auftragen Fußbodenbeläge verlegt werden sollen, sind gröbere Aggregationen jedoch nicht annehmbar, da sie sich auf der Oberfläche vieler glatter Fußbodenbelagmaterialien abzeichnen.

Es ist auch bekannt, dem Anmachwasser von Zement Staubminderungsmittel zuzusetzen, um das Stauben beim Spritzauftrag zu vermindern. So beschreibt die JP-A 61/31335 Anmachwasserzusätze wie Polyethylenglykol für Spritzputz und die JP-A 57/149856 Polyethylenglykol als Zusatz zu Gipsanmachwasser, um das nachträgliche Stauben beim Schneiden der Gipserzeugnisse zu vermindern. Die JP-A 58/15056 und 59/141448 beschreiben den Zusatz von Polyethylenglykol mit einem durchschnittlichen Molekulargewicht von 2000 zu trockenen Spritzbetonmassen zur Verminderung der Staubbildung. Schließlich ist in einer Firmenschrift (Fa. Erbslöh, Düsseldorf) mit dem Titel "Das Pluronic-Gitternetz", Auflage IV, erwähnt, daß Ethylenoxid/Propylenoxid-Blockcopolymere als Staubbindemittel eingesetzt werden können, ohne daß allerdings angegeben ist, welche staubenden Materialien mit diesen Verbindungen, die eine Vielzahl von Produkten mit unterschiedlichen Gehalten an Ethylenoxygruppen, Molekulargewichten, Schmelz- und Festpunkten und dergleichen umfassen, behandelt werden können.

Es wurde jedoch gefunden, daß Polyethylenglykol, Glycerin und eine große Anzahl der in der vorgenannten Firmenschrift "Das Pluronic-Gitternetz" erwähnten Ethylenoxid/Propylen-Blockcopolymeren bei Spachtelmassen zu einer unerwünschten Abbindeverzögerung und einer Hygroskopie der Spachtelmassen führt und somit für den hier angegebenen Zweck ungeeignet ist. Verwendet man andererseits hydrophobe Additive, zu denen ebenfalls eine große Anzahl vorbekannter Ethylenoxid/Propylenoxid-Blockcopolymere aus der vorgenannten Firmenschrift gehört, zur Verminderung der Staubbildung, ergeben sich für die pulverförmigen Spachtelmassen Benetzungsschwierigkeiten.

Die Erfindung beruht auf der Erkenntnis, daß der Einsatz von ausgewählten Ethylenoxid/Propylenoxid-Blockcopolymeren mit den eingangs genannten Gehalten an Ethylenoxygruppen und Molmassen des Polyethylenblocks zu einer wirksamen Verminderung des Staubens der genannten pulverförmigen Massen führt, wobei wichtige Parameter der ausgehärteten Massen, wie Druckfestigkeit, Biegezugfestigkeit und Schwindung, nicht beeinträchtigt werden und gleichzeitig die Anrührbarkeit bzw. Benetzbarkeit der pulverförmigen Massen mit Wasser sowie das Fließverhalten der mit Wasser angesetzten pulverförmigen Massen verbessert werden.

Die erfindungsgemäß zu verwendenden Ethylenoxid/Propylenoxid-Blockcopolymere sind handelsübliche Verbindungen, die durch Umsetzung von Polypropylenglykol mit den angegebenen Zahlenmitteln der Molmassen mit Ethylenoxid erhältlich sind und somit an beiden Enden des an sich hydrophoben Polypropylenglykolmoleküls hydrophile Polyoxyethylengruppen aufweisen.

Gemäß einer bevorzugten Ausführungsform der Erfindung weisen die Ethylenoxid/Propylenoxid-Blockcopolymere einen Gehalt an Ethylenoxidgruppen von 10 bis 30 Gew.-% und der Polypropylenglykolblock ein Zahlenmittel der Molmassen von 1700 bis 2500 auf.

Gemäß einer weiteren vorteilhatten Ausführungsform der Erfindung werden die Ethylenoxid/Propylenoxid-Blockcopolymeren den hydraulisch abbindenden Massen in einer Menge von 0,3 bis 5, insbesondere von 0,3 bis 1,5 Gew.-%, bezogen auf das Gesamtgewicht der Massen, zugesetzt.

Weiterhin ist es vorteilhaft, daß die Ethylenoxid/Propylenoxid-Blockcopolymere Fließpunkte bzw. Schmelzpunkte aufweisen, die weniger als 50°C, insbesondere weniger als 25°C, aufweisen, weil dann eine besonders leichte, gründliche Vermischung der Blockcopolymeren mit den feinpulverigen Massen möglich ist. Die Blockcopolymere können im übrigen bereits während der Herstellung der pulverförmigen, hydraulisch abbindenden Massen zugesetzt werden, z.B. durch Injektion, Aufsprühen, mit oder ohne Druck und dergleichen. Wenn sie bei Umgebungstemperatur - bevorzugt - flüssig sind, ist es nicht erforderlich, sie vor der Zumischung zu erwärmen. Es ist in jedem Falle jedoch dafür zu sorgen, daß eine gleichmäßige Vermischung der erfindungsgemäß zu verwendenden Blockcopolymere mit den pulverförmigen Massen stattfindet.

Besonders vorteilhaft ist die Verwendung der Ethylenoxid/Propylenoxid-Blockcopolymere der oben genannten Art in hydraulisch abbindenden Massen, insbesondere Spachtelmassen, mit der folgenden Zusammensetzung:
15 bis 60 Gew.-Teile Tonerdeschmelzzement
0 bis 25 Gew.-Teile Gips, insbesondere als Gips-Halbhydrat,
0 bis 70 Gew.-Teile Portlandzement,
20 bis 80 Gew.-Teile Quarzsand,
0 bis 30 Gew.-Teile Füllstoffe, insbesondere Calciumcarbonat,
0 bis 6 Gew.-Teile Dasein und/oder pflanzliche Proteine,
0 bis 16 Gew.-Teile Redispersionspulver sowie
0 bis 3 Gew.-Teile übliche Additive wie Verflüssiger, Beschleuniger, Verzögerer und/oder andere Hilfsstoffe.

Die Erfindung betrifft weiterhin hydraulisch abbindende Massen, insbesondere zementäre Spachtelmassen, die die Ethylenoxid/Propylenoxid-Blockcopolymere mit den oben genannten Merkmalen enthalten. Diese Massen zeichnen sich gegenüber Massen, die keine Blockcopolymere der genannten Art enthalten, insbesondere durch die folgenden, vorteilhaften Eigenschaften aus:
- geringere Staubentwicklung
- verbesserte Benetzbarkeit
- geringerer Wasserzementfaktor
- besseres Fließverhalten der mit Wasser angesetzten Massen
- weniger Spannung der ausgehärteten Massen und
- Vergleichmäßigung der Qualität von mit den Massen erhaltenen Beschichtungen.

Die Erfindung wird im folgenden anhand eines bevorzugten Ausführungsbeispiels näher erläutert.

Es wurde eine Spachtelmasse aus den folgenden Komponenten hergestellt:

| | |
|---|---|
| Portlandzement 35 F: | 38 Gew.-% |
| Tonerdeschmelzzement: | 12 Gew.-% |
| Quarzsand (Teilchengröße 0 bis 0,3 mm): | 30,5 Gew.-% |
| Kalksteinmehl: | 9 Gew.-% |
| Kalkhydrat: | 6 Gew.-% |
| Casein: | 3,5 Gew.-% |
| Harnstoff: | 0,5 Gew.-% |
| Stuckgips: | 0,5 Gew.-% |
| Soda: | 0,05 Gew.-% |
| Entschäumer: | 0,02 Gew.-% |

Die Vermischung dieser Komponenten erfolgte in einem Intensivmischgerät. Die erhaltene Spachtelmasse diente zu Vergleichszwecken.

Eine Spachtelmasse der gleichen Zusammensetzung wie oben beschrieben wurde unter zusätzlicher Zumischung von 1 Gew.-%, bezogen auf das Gesamtgewicht der Spachtelmasse, eines Ethylenoxid/Propylenoxid-Blockcopolymeren hergestellt, das ein Zahlenmittel der Molmasse des Polypropylenglykolblocks von ca. 2200 und einen Gehalt an Ethylenoxygruppen von ca. 20 Gew.-%, bezogen auf das Gesamtgewicht des Blockcopolymeren, sowie einen Fließpunkt von -4°C aufwies.

Jeweils 250 g der oben genannten Spachtelmassen wurden mit jeweils 75 ml Wasser angesetzt; der dabei sich bildende Staub wurde an einem GRAVICON-Gerät, Typ VC 25, Hersteller: Fa. Ströhlein, Kaarst, Bundesrepublik Deutschland, gemessen. Die Messung ergab, daß die Staubentwicklung bei der Spachtelmasse der Erfindung um den Faktor 5 niedriger war als bei dem Vergleichsprodukt.

Die Verarbeitungseigenschaften der hergestellten Spachtelmassen nach dem Ansetzen mit Wasser wurden an einem Vicat-Ring gemäß DIN 1164 gemessen (Dimensionierung des Vicat-Ringes: 40 mm Höhe, 75 mm Durchmesser unten, 65 mm Durchmesser oben). Die Erstarrungszeit war bei beiden Produkten im wesentlichen gleich (Vergleichsprodukt 45 bis 75 min, Produkt der Erfindung 50 bis 85 min).

Das Ausbreitmaß wurde in der Weise bestimmt, daß die Spachtelmasse mit dem Ansatzwasser 1 Minute gerührt und in den Vicat-Ring gefüllt wurde. Nach 10-minütigem Stehenlassen wurde der Ring nach oben abgezogen. 60 Sekunden nach dem Abziehen des Ringes wurde der Durchmesser der sich ausbreitenden Spachtelmasse als Ausbreitmaß bestimmt. Das Ausbreitmaß betrug bei dem Vergleichsprodukt 20 bis 23 cm und lag damit niedriger als bei dem Produkt der Erfindung, das ein Ausbreitmaß von 21 bis 25 cm ergab.

## Patentansprüche

1. Verwendung von durch Anlagerung von Ethylenoxid an Polypropylenglykol gebildeten Ethylenoxid/Propylenoxid-Blockcopolymeren mit einem Gehalt an 5 bis 35 Gew.-%, bezogen auf das Gesamtgewicht der Blockcopolymeren, an Ethylenoxygruppen und einem Zahlenmittel der Molmasse des Polypropylenglykols im Bereich von 1500 bis 3000, als Zusatz zur Verminderung des Staubens trockener, hydraulisch abbindender Massen, insbesondere zementärer Spachtelmassen.

2. Verwendung nach Anspruch 1, dadurch gekennzeichnet, daß die Ethylenoxid/Propylenoxid-Blockcopolymere einen Gehalt an Ethylenoxygruppen von 10 bis 30 Gew.-% und ein Zahlenmittel der Molmassert des Polypropylenglykolblocks von 1700 bis 2500 aufweisen.

3. Verwendung nach Anspruch 1 oder 2, dadurch gekennzeichnet, daß die Ethylenoxid/Propylenoxid-Blockcopolymere in den hydraulisch abbindenden Massen in einer Menge von 0,1 bis 5, insbesondere von 0,3 bis 1,5 Gew.-%, bezogen auf das Gesamtgewicht der Massen, enthalten sind.

4. Verwendung nach mindestens einem der Ansprüche 1 bis 3, dadurch gekennzeichnet, daß die Ethylenoxid/Propylenoxid-Blockcopolymere Fließpunkte bzw. Schmelzpunkte von weniger als 50°C, insbesondere von weniger als 25°C, aufweisen.

5. Verwendung nach mindestens einem der Ansprüche 1 bis 4, dadurch gekennzeichnet, daß die hydraulisch abbindenden Massen die folgende Zusammensetzung aufweisen:
15 bis 60 Gew.-Teile Tonerdeschmelzzement
0 bis 25 Gew.-Teile Gips, insbesondere als Gips-Halbhydrat,
0 bis 70 Gew.-Teile Portlandzement,
20 bis 80 Gew.-Teile Quarzsand,
0 bis 30 Gew.-Teile Füllstoffe, insbesondere Calciumcarbonat,
0 bis 6 Gew.-Teile Casein und/oder pflanzliche Proteine,
0 bis 16 Gew.-Teile Redispersionspulver sowie
0 bis 3 Gew.-Teile übliche Additive wie Verflüssiger, Beschleuniger, Verzögerer und/oder andere Hilfsstoffe.

6. Hydraulisch abbindende pulverförmige Massen, insbesondere zementäre Spachtelmassen, enthaltend 0,3 - 5 Gew.-%, bezogen auf das Gesamtgewicht der Massen, von durch Anlagerung von Ethylenoxid an Polypropylenglykol gebildete Ethylenoxid/Propylenoxid-Blockcopolymere mit einem Gehalt an 5 bis 35 Gew.-%, bezogen auf das Gesamtgewicht der Blockcopolymere, an Ethylenoxygruppen und einem Zahlenmittel der Molmasse des Polypropylenglykols im Bereich von 1500 bis 3000, als Zusatz zur Verminderung des Staubens der trockenen Massen.

7. Hydraulisch abbindende pulverförmige Massen nach Anspruch 6, dadurch gekennzeichnet, daß die Ethylenoxid/Propylenoxid-Blockcopolymere einen Gehalt an Ethylenoxygruppen von 10 bis 30 Gew.-% und ein Zahlenmittel der Molmassen des Polypropylenblocks von 1700 bis 2500 aufweisen.

8. Hydraulisch abbindende pulverförmige Massen nach Anspruch 6 oder 7, dadurch gekennzeichnet, daß die Ethylenoxid/Propylenoxid-Blockcopolymere in einer Menge von 0,3 bis 5, insbesonders von 0,3 bis 1,5 Gew.-%., bezogen auf das Gesamtgewicht der Massen, enthalten sind.

9. Hydraulisch abbindende pulverförmige Massen nach mindestens einem der Ansprüche 6 bis 8, gekennzeichnet durch die Zusammensetzung
15 bis 60 Gew.-Teile Tonerdeschmelzzement
0 bis 25 Gew.-Teile Gips, insbesondere als Gips-Halbhydrat,
0 bis 70 Gew.-Teile Portlandzement,
20 bis 80 Gew.-Teile Quarzsand,
0 bis 30 Gew.-Teile Füllstoffe, insbesondere Calciumcarbonat,
0 bis 6 Gew.-Teile Casein und/oder pflanzliche Proteine,
0 bis 16 Gew.-Teile Redispersionspulver sowie
0 bis 3 Gew.-Teile übliche Additive wie Verflüssiger, Beschleuniger, Verzögerer und/oder andere Hilfsstoffe, sowie
0,3 bis 5, insbesondere 0,3 bis 1,5 Gew.-% der Ethylenoxid/Propylenoxid-Blockcopolymeren.

## Claims

1. The use ethylene oxide/propylene oxide block copolymers formed by addition of ethylene oxide onto polypropylene glycol and having a content of 5 to 35% by weight, based on the total weight of the block copolymers, of ethyleneoxy groups and a number average molecular weight of the polypropylene glycol of 1,500 to 3,000 as an additive for reducing dust emission from dry, hydraulically setting mixtures, more particularly cement-based screeds.

2. The use claimed in claim 1, characterized in that the ethylene oxide/propylene oxide block copolymers have a content of ethyleneoxy groups of 10 to 30% by weight and a number average molecular weight of the polypropylene glycol block of 1,700 to 2,500.

3. The use claimed in claim 1 or 2, characterized in that the ethylene oxide/propylene oxide block copolymers are present in the hydraulically setting mixtures in a quantity of 0.1 to 5% by weight and, more particularly, in a quantity of 0.3 to 1.5% by weight, based on the total weight of the mixtures.

4. The use claimed in at least one of claims 1 to 3, characterized in that the ethylene oxide/propylene oxide block copolymers have flow points or melting points below 50°C and, more particularly, below 25°C.

5. The use claimed in at least one of claims 1 to 4, characterized in that the hydraulically setting mixtures have the following composition:
15 to 60 parts by weight high-alumina cement,
0 to 25 parts by weight gypsum, more particularly in the form of gypsym semihydrate,
0 to 70 parts by weight Portland cement,
20 to 80 parts by weight quartz sand,
0 to 30 parts by weight fillers, particularly calcium carbonate,
0 to 6 parts by weight casein and/or vegetable proteins,
0 to 16 parts by weight redispersion powder and
0 to 3 parts by weight typical additives, such as plasticizers, accelerators, retarders and/or other auxiliaries.

6. Hydraulically setting powder-form mixtures, more particularly cement-based screeds, containing 0,3 to 5 % by weight, based on the total weight of the mixture ethylene oxide/propylene oxide block copolymers formed by addition of ethylene oxide onto polypropylene glycol and having a content of 5 to 35% by weight, based on the total weight of the block copolymers of ethyleneoxy groups and a number average molecular weight of the polypropylene glycol of 1,500 to 3,000 as an additive for reducing dust emission from the dry mixtures.

7. Hydraulically setting powder-form mixtures as claimed in claim 6, characterized in that the ethylene oxide/propylene oxide block copolymers have a content of ethyleneoxy groups of 10 to 30% by weight and a number average molecular weight of the polypropylene block of 1,700 to 2,500.

8. Hydraulically setting powder-form mixtures as claimed in claim 6 or 7, characterized in that the ethylene oxide/propylene oxide block copolymers are present in a quantity of 0,3 to 5 % by weight and, more particularly, in a quantity of 0.3 to 1.5% by weight, based on the total weight of the mixtures.

9. Hydraulically setting mixtures as claimed in at least one of claims 6 to 8, characterized by the following composition
15 to 60 parts by weight high-alumina cement,
0 to 25 parts by weight gypsum, more particularly in the form of gypsum semihydrate,
0 to 70 parts by weight Portland cement,
20 to 80 parts by weight quartz sand,
0 to 30 parts by weight fillers, particularly calcium carbonate,
0 to 6 parts by weight casein and/or vegetable proteins,
0 to 16 parts by weight redispersion powder and
0 to 3 parts by weight typical additives, such as plasticizers, accelerators, retarders and/or other auxiliaries and
0,3 to 5 and, more particularly, 0.3 to 1.5% by weight of the ethylene oxide/propylene oxide block copolymers.

## Revendications

1. Utilisation de copolymères en blocs oxyde d'éthylène/oxyde de propylène formés par addition d'oxyde d'éthylène sur le polypropylèneglycol, avant une teneur de 5 à 35 % en poids - rapporte au poids total du copolymère en bloc - en groupes oxyéthylénés et avant une moyenne numérique de la masse molaire du polypropylèneglycol dans la zone de 1500 à 3000 en tant qu'additif en vue de la diminution de la formation de poussière de masses sèches, à prise hydraulique, en particulier de masses de garnissage de ciment.

2. Utilisation selon la revendication 1, caractérisée en ce que les copolymères en blocs oxyde d'éthylène/oxyde de propylène possèdent une teneur en groupes éthylèneoxye de 10 à 30 % en poids et une moyenne numérique des masses molaires du bloc de propylèneglycol allant de 1700 à 2500.

3. Utilisation selon la revendication 1 ou 2, caractérisée en ce que les copolymères en blocs oxyde d'éthylène/oxyde de propylène sont inclus dans les masses à prise hydraulique en quantités allant de 0,1 à 5 - en particulier de 0,3 à 1,5 % en poids - rapporté au poids total des masses.

4. Utilisation selon au moins l'une des revendications 1 à 3, caractérisée en ce que les copolymères en blocs oxyde d'éthylène/oxyde de propylène possèdent ces points d'écoulement ou des points de fusion inférieurs à 50°C, en particulier inférieurs à 25°C.

5. Utilisation selon au moins l'une des revendications 1 à 4, caractérisée en ce que les masses à prise hydraulique possèdent la composition suivante:
- 15 à 60 parties en poids de ciment alumineux fondu.
- 0 à 25 parties en poids de Gypse en particulier sous forme de Gypse hemihydraté,
- 0 à 70 parties en poids de ciment de Portland,
- 20 à 80 parties en poids de sable de Quartz,
- 0 à 30 parties en poids de substances de remplissage, en particulier de Carbonate de Calcium,
- 0 à 6 parties en poids de Caséine et/ou de protéines végétales,
- 0 à 16 parties en poids de poudre de redispersion ainsi que,
- 0 à 3 parties en poids d'additifs habituels comme des agents liquéfiants, des accélérateurs, des retardateurs, et/ou d'autres adjuvants.

6. Masses pulvérulentes à prise hydraulique, en particulier masses de garnissage en ciment qui contiennent 0,3 à 5 % en poids, rapporté au poids total des masses des copolymères en blocs oxyde d'éthylène/oxyde de propylène formés par addition d'oxyde d'éthylène sur du polypropylèneglycol, ayant une teneur de 5 à 35 %, rapporté au poids total des copolymères en blocs, de groupes oxyéthylènoxy et une moyenne numérique des masses molaires du polypropylèneglycol dans la zone de 1500 à 3000 en tant qu'additif en vue de la diminution de la formation de poussière des masses sèches.

7. Masses pulvérulentes à prise hydraulique selon la revendication 6, caractérisées en ce que les copolymères en blocs oxyde d'éthylène/oxyde de propylène possèdent une teneur en groupes éthoxylèneoxy allant de 10 à 30 % en poids et une moyenne numérique des masses molaires de blocs de polypropylène de 1700 à 2500.

8. Masses pulvérulentes à prise hydraulique selon la revendication 6 ou la revendication 7, caractérisées en ce que les copolymères en blocs oxyde d'éthylène/oxyde de propylène sont inclus en une quantité allant de 0,3 á 5 - en particulier de 0,3 à 1,5 % en poids - rapporté au poids total des masses.

9. Masses pulvérulentes à prise hydraulique selon au moins l'une des revendications 6 à 8, caractérisées par la composition :
- 15 à 60 parties en poids de ciment alumineux fondu,
- 0 à 25 parties en poids de gypse en particulier sous forme de gypse hemihydraté,
- 0 à 70 parties en poids de ciment de Portland,
- 20 à 80 parties en poids de sable de quartz,
- 0 à 30 parties en poids de substances de remplissage, en particulier du carbonate de calcium,
- 0 à 6 parties en poids de caséine et/ou de protéines végétales,
- 0 à 16 parties en poids de poudre de redispersion, ainsi que :
- 0 à 3 parties en poids d'additifs habituels comme des agents liquéfiants, des accélérateurs, des retardateurs et/ou d'autres adjuvants, ainsi que
- 0,3 á 5 - en particulier 0,3 à 1,5 % en poids de copolymères en blocs oxyde d'éthylène/oxyde de propylène.
